# EUROPÄISCHE PATENTSCHRIFT

(11) **EP 0 340 430 B1**
(45) Veröffentlichungstag und Bekanntmachung des Hinweises auf die Patenterteilung: **09.06.1993**
(21) Anmeldenummer: 89104567.6
(22) Anmeldetag: 15.03.1989
(51) Int. Cl.: F16J 15/08, F16J 15/16

(54) **Vorrichtung zur Abdichtung**
Sealing device
Dispositif d'étanchéification

(30) Priorität: 05.05.1988 DE 3815402
(43) Veröffentlichungstag der Anmeldung: 08.11.1989
(73) Patentinhaber: MANNESMANN Aktiengesellschaft, 40027 Düsseldorf (DE)
(72) Erfinder: Janich, Hans-Jürgen, D-4720 Beckum (DE)
(74) Vertreter: Tetzner, Volkmar, Dr.-Ing. Dr. jur.

(56) Entgegenhaltungen:
- DE-A- 2 502 240
- FR-A- 2 480 892
- US-A- 1 770 548

## Beschreibung

Die Erfindung betrifft eine Vorrichtung zur Abdichtung der Berührungszone zwischen einem beweglichen und einem festen Anlagenteil, insbesondere zwischen einem beweglichen Absperrelement einer Rohrleitung und einem ortsfesten Sitz, enthaltend
a) wenigstens ein durch einen langgestreckten Federstahlstreifen gebildetes Dichtungselement, das zwei ebene Längskantenbereiche sowie eine zwischen diesen ebenen Längskantenbereichen angeordnete, quer zur Längsrichtung des Federstahlstreifens bogenförmig gekrümmte Zone aufweist, wobei das Dichtungselement in der Schließstellung des beweglichen Anlagenteiles mit einem Teilbereich dieser gekrümmten Zone federnd an einer Gegenfläche anliegt.
b) eine Klemmeinrichtung zum Einspannen der beiden Längskantenbereiche des Dichtungselementes.

Eine Vorrichtung der vorstehend genannten Art ist beispielsweise aus der DE-A-25 02 240 bekannt.

Vorrichtungen dieser Art dienen beispielsweise dazu, zwischen einem beweglichen Absperrelement (etwa einem Schwenkflügel oder einer Schieberplatte) einer Heißgasrohrleitung großer Abmessung und einem ortsfesten Sitz eine zuverlässige gasdichte Abdichtung zu gewährleisten.

Bei den bisher bekannten Ausführungen dieser Art stellen die beiden ebenen Längskantenbereiche des Dichtungselementes eine geradlinige Verlängerung der bogenförmig gekrümmten Zone dar, wobei die beiden ebenen Längskantenbereiche im allgemeinen mittels gesonderter Klemmeinrichtungen eingespannt werden. Nachteilig ist bei diesen bekannten Ausführungen vor allem die beträchtliche Bauhöhe sowie die schwierige Montage.

Durch die FR-A-24 80 892 ist weiterhin ein metallisches Dichtungselement mit U-förmigem Querschnitt bekannt, wobei die beiden Enden der Schenkel des U nach innen zurückgebogen sind.

Weiterhin ist durch die US-A-1 770 548 eine rohrförmige metallische Dichtung bekannt, bei der die an die gekrümmte Umfangszone der Dichtung anschließenden, ebenen Endbereiche des Dichtungsmateriales zwecks Erzielung einer Verstärkung jeweils zu einer Doppellage gefaltet sind, wobei diese beiden doppellagigen Endbereiche der Dichtung übereinander liegen und in entgegengesetzte Richtung weisen. Die Dichtung besitzt damit insgesamt einen annähernd glatten Außenumfang ohne vorstehende Teile.

Der Erfindung liegt die Aufgabe zugrunde, eine Vorrichtung der eingangs genannten Gattung so auszubilden, daß die Bauhöhe des Dichtungselementes wesentlich verringert ist. In weiterer Ausgestaltung der Erfindung soll ferner eine wesentlich vereinfachte Montage und Demontage des Dichtungselementes erreicht werden.

Diese Aufgabe wird erfindungsgemäß dadurch gelöst, daß das Dichtungslement wenigstens eine Abwinklung zwischen dem einen Längskantenbereich und der gekrümmten Zone enthält und im übrigen so geformt ist, daß die beiden Längskantenbereiche übereinander liegen und nach der gleichen Seite weisen.

Zweckmäßige Ausgestaltungen der Erfindung sind Gegenstand der Unteransprüche.

Erfindungsgemäß enthält das Dichtungselement wenigstens eine Abwinklung zwischen dem einen Längskantenbereich und der gekrümmten Zone und ist im übrigen so geformt, daß die beiden Längskantenbereiche übereinander liegen und nach der gleichen Seite weisen. Eine derartige Ausgestaltung des Dichtungselementes gestattet es, die für den jeweiligen Anwendungsfall gewünschte Federsteifigkeit des Dichtungselementes mit einer minimalen Bauhöhe zu erreichen. Zugleich wird erfindungsgemäß die Montage und Demontage des Dichtungselementes wesentlich vereinfacht.

Eine zweckmäßige Ausgestaltung der Erfindung sieht vor, daß die beiden Längskantenbereiche des Dichtungselementes fest miteinander verbunden und im bereits verbundenen Zustand mittels der Klemmeinrichtung gemeinsam einspannbar sind. Die feste Verbindung der beiden Längskantenbereiche und damit die bogenförmige Krümmung des Dichtungselementes sowie die Herstellung der Federspannung können bei einer solchen Ausführung bereits im Werk durchgeführt werden. Bei der Montage der Dichtungsvorrichtung brauchen dann lediglich die beiden Längskantenbereiche des Dichtungselementes mittels der Klemmeinrichtung gemeinsam eingespannt zu werden, was angesichts der festen Verbindung dieser beiden Längskantenbereiche keine Schwierigkeiten bereitet. Entsprechend einfach gestaltet sich auch die Demontage des Dichtungselementes, beispielsweise zum Zwecke des Austausches.

Weitere zweckmäßige Ausgestaltungen der Erfindung werden im Zusammenhang mit der Beschreibung einiger Ausführungsbeispiele näher erläutert.

In der Zeichnung zeigen
- Fig. 1: ein erfindungsgemäß gestaltetes Dichtungselement (vor dem Einbau),
- Fig. 2: das Dichtungselement gemäß Fig. 1 im eingebauten Zustand,
- Fig. 3 bis 9: weitere Ausführungsbeispiele der Erfindung.

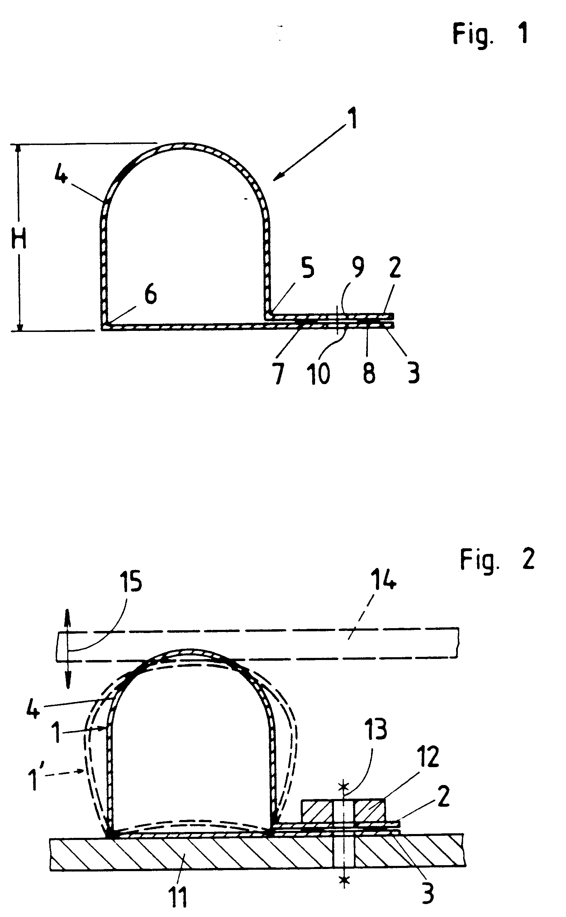

Das in Fig. 1 veranschaulichte Dichtungselement 1 wird durch einen langgestreckten Federstahlstreifen gebildet, der in Fig. 1 im Querschnitt veranschaulicht ist.

Er enthält zwei ebene Längskantenbereiche 2, 3 sowie eine zwischen diesen ebenen Längskantenbereichen angeordnete, quer zur Längsrichtung des Federstahlstreifens bogenförmig gekrümmte Zone 4.

Zwischen dem ebenen Längskantenbereich 2 und der gekrümmten Zone 4 ist eine Abwinklung 5 von 90° vorgesehen. Eine entsprechende Abwinklung 6 befindet sich zwischen dem Längskantenbereich 3 und der gekrümmten Zone 4. Die beiden Längskantenbereiche 2 und 3 sind quer zur Längsrichtung des Dichtungselementes unterschiedlich lang und weisen nach der gleichen Seite.

Die beiden Längskantenbereiche 2 und 3 sind in gewissen Abständen (senkrecht zur Zeichenebene der Fig. 1) durch Punktschweißungen 7, 8 fest miteinander verbunden, wobei diese Schweißverbindungen die Federspannung der gekrümmten Zone 4 aufnehmen.

In den Längskantenbereichen 2, 3 sind ferner in gewissen Abständen Durchgangslöcher 9, 10 zur Aufnahme von Verbindungselementen vorgesehen.

Fig. 2 zeigt das Dichtungselement 1 gemäß Fig. 1 im eingebauten Zustand. Die ebenen Längskantenbereiche 2, 3 sind hierbei zwischen einem ortsfesten Sitz 11 und einer Klemmleiste 12 eingespannt, wobei die Klemmleiste 12 über Verbindungselemente 13 mit dem ortsfesten Sitz 11 verbunden ist.

Mit dem ortsfesten Sitz 11 wirkt ein bewegliches Absperrelement 14 zusammen, das beispielsweise durch einen schwenkbaren Flügel oder eine Schieberplatte gebildet wird und in Richtung des Pfeiles 15 beweglich ist.

In der Schließstellung des Absperrelementes 14 kommt das Dichtungselement 1 mit einem Teilbereich seiner gekrümmten Zone 4 zur Anlage an dem Absperrelement 14 und wird hierdurch elastisch so verformt, wie dies in Fig. 2 durch die gestrichelte Kontur 1′ veranschaulicht ist.

Die Montage und Demontage des Dichtungselementes 1 ist denkbar einfach und kann ohne weiteres von einer einzigen Person durchgeführt werden. Bei der Montage des vorgefertigten Dichtungselementes, dessen Längskantenbereiche 2 und 3 fest miteinander verbunden sind, wird lediglich die Klemmleiste 12 aufgesetzt und die ebenen Längskantenbereiche 2, 3 mittels der Verbindungselemente 13 eingespannt. Entsprechend einfach ist auch ein etwa erforderliches Auswechseln der Dichtungselemente.

Bei dem Ausführungsbeispiel gemäß Fig. 2 sind die beiden Längskantenbereiche 2, 3 des Dichtungselementes 1 quer zur Bewegungsrichtung (Pfeil 15) des beweglichen Anlagenteiles (Absperrelement 14) angeordnet. Diese Ausführung ergibt eine besonders niedrige Einbauhöhe H des Dichtungselementes.

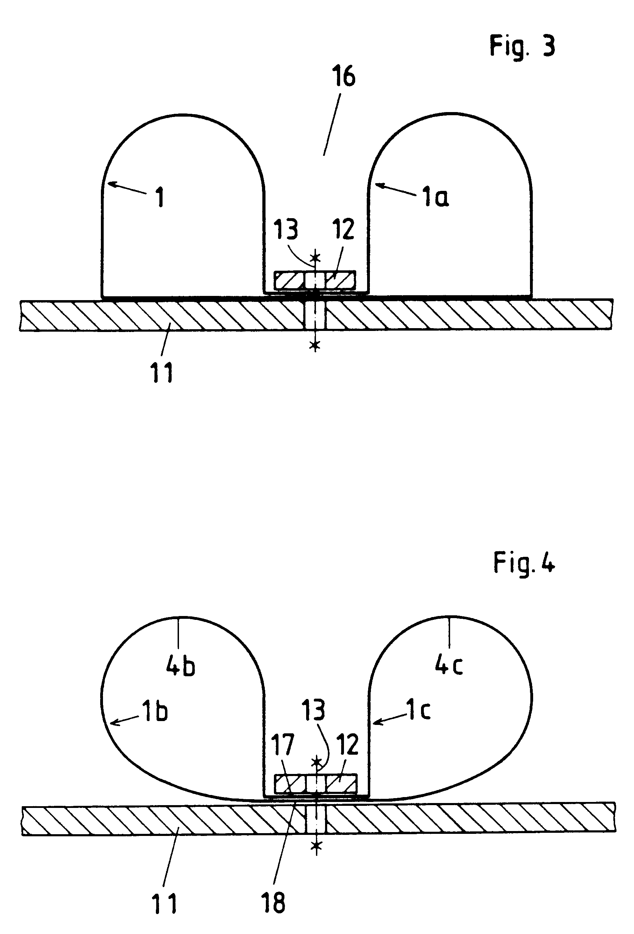

Bei dem Ausführungsbeispiel gemäß Fig. 3 sind zwei spiegelsymmetrisch ausgebildete Dichtungselemente 1 und 1a vorgesehen, die mittels derselben Klemmleiste 12 eingespannt werden können. Eine solche Ausführung ist beispielsweise dann zweckmäßig, wenn in den Raum 16 zwischen den beiden Dichtungselementen 1 und 1a ein gasförmiges Sperrmittel, z. B. Sperrluft, eingeführt werden soll.

Bei dem Ausführungsbeispiel gemäß Fig. 4 sind zwei spiegelsymmetrisch ausgebildete Dichtungselemente 1b, 1c zu einem einstückigen Doppeldichtungselement vereinigt, wobei der zwischen den beiden gekrümmten Zonen 4b, 4c liegende mittlere Bereich 17, 18 mittels der Klemmleiste 12 und der Verbindungselemente 13 eingespannt ist. Die beiden mittleren Bereiche 17, 18 dieses Doppeldichtungselementes sind fest, vorzugsweise durch Punktschweißen miteinander verbunden, so daß sie im bereits verbundenen Zustand mittels der Klemmeinrichtung gemeinsam einspannbar sind.

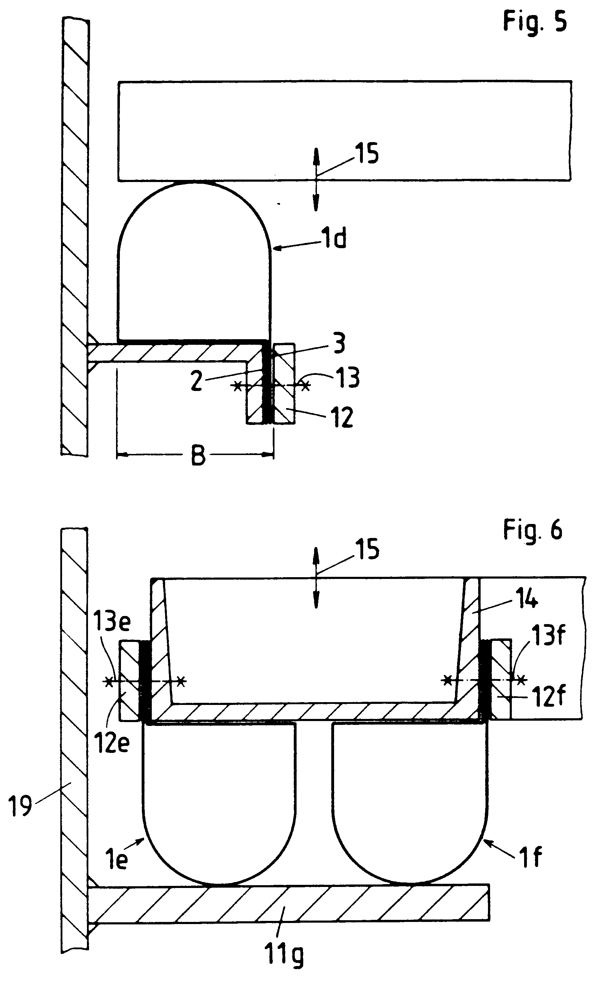

Fig. 5 zeigt ein Ausführungsbeispiel, bei dem die beiden Längskantenbereiche 2, 3 des Dichtungselementes 1d parallel zur Bewegungsrichtung (Pfeil 15) des beweglichen Anlagenteiles (Absperrelement 14) angeordnet sind. Auch hierbei sind die beiden fest miteinander verbundenen Längskantenbereiche 2 und 3 durch eine Klemmleiste 12 und Verbindungselemente 13 gemeinsam eingespannt. Diese Ausführung zeichnet sich durch eine besonders kleine Baubreite B des Dichtungselementes 1d aus.

Bei dem Ausführungsbeispiel gemäß Fig. 6 sind die beiden Dichtungselemente 1e und 1f an dem beweglichen Absperrelement 14 befestigt, und zwar mittels gesonderter Klemmleisten 12e und 12f und Verbindungselementen 13e bzw. 13f.

In der Schließstellung des beweglichen Absperrelementes 14 kommen die Dichtungselemente 1e und 1f zur Anlage an dem ortsfesten Sitz 11g, beispielsweise einem Bund des Rohrleitungsgehäuses 19.

Wie bei den zuvor erläuterten Ausführungsbeispielen sind auch bei der Variante gemäß Fig. 6 die beiden Längskantenbereiche des Dichtungselementes fest, vorzugsweise durch Punktschweißen, miteinander verbunden, so daß sie im bereits verbundenen Zustand mit der Klemmeinrichtung gemeinsam eingespannt werden können.

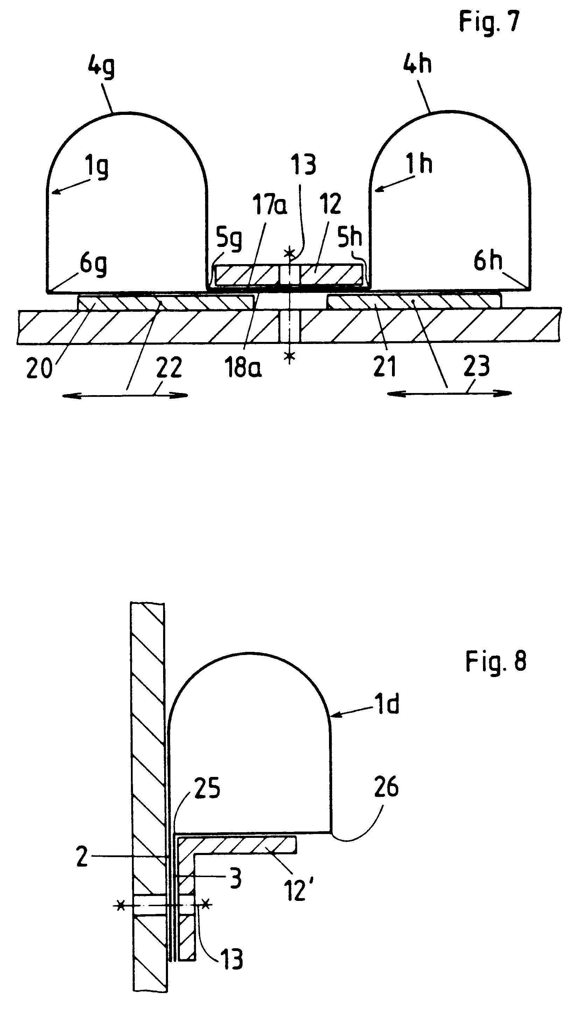

Fig. 7 zeigt ein Ausführungsbeispiel, bei dem (ähnlich wie in Fig. 4) Dichtungselemente 1g und 1h zu einem einstückigen Doppeldichtungselement vereinigt sind. Die beiden Dichtungselemente enthalten (wie bei der Anordnung gemäß den Fig. 1 und 2) je zwei Abwinklungen 5g, 6g bzw. 5h, 6h, über die die mittleren Bereiche 17a, 18a (die hier die Längskantenbereiche bilden) mit den gekrümmten Zonen 4g bzw. 4h in Verbindung stehen.

Der zwischen den beiden Abwinklungen 5g, 6g bzw. 5h, 6h befindliche Bereich der Dichtungselemente 1g, 1h stützt sich mit einem Teil seiner Breite auf einem Auflager 20 bzw. 21 ab, das in Richtung der Pfeile 22, 23 verstellbar ist. Durch Verstellung dieser Auflager 20, 21 läßt sich die Federkraft der Dichtungselemente 1g, 1h in weiten Grenzen einstellen. So ergibt sich beispielsweise eine wesentlich geringere Federkraft, d. h. ein weicheres Federverhalten des Dichtungselementes 1g, wenn das Auflager 20 nach rechts verstellt wird.

Eine ähnliche Lösung zur Änderung der Federkraft zeigt Fig. 8. Das Dichtungselement 1d entspricht hierbei dem Ausführungsbeispiel der Fig. 5. Zur Einspannung der Längskantenbereiche 2 und 3 dient eine winkelförmige Klemmleiste 12′, deren einer Schenkel den zwischen den Abwinklungen 25 und 26 befindlichen Bereich des Dichtungselementes nur auf einem Teil seiner Breite unterstützt. Durch Veränderung der Länge dieses Schenkels läßt sich die Federkraft des Dichtungselementes auf einfache Weise auf den gewünschten Wert bringen.

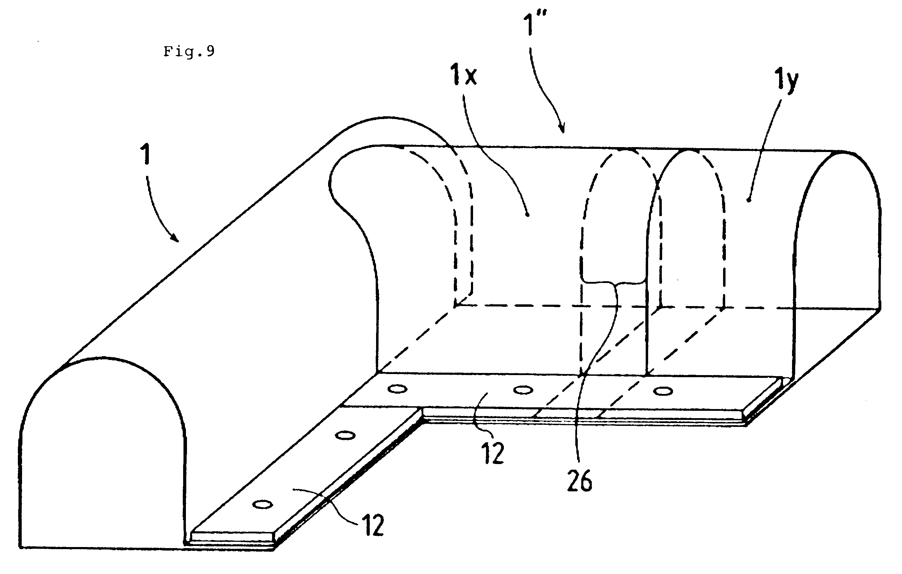

Fig. 9 veranschaulicht, wie bei einer aus mehreren Dichtungselementen zusammengesetzten Dichtungsvorrichtung die Stoßstellen an den Ecken ausgestaltet sein können. Von den beiden in Fig. 9 dargestellten Dichtungselementen 1 und 1˝ stößt das Dichtungselement 1˝ unter einem Winkel von etwa 90° stumpf an das andere Dichtungselement 1 an, wobei das letztgenannte Dichtungselement 1 noch etwas über die Stoßstelle vorsteht.

Das Dichtungselement 1˝ weist an seinem dem anderen Dichtungselement 1 zugewandten Ende ein Schubstück 1x auf, das mit dem Hauptteil 1y des Dichtungselementes 1˝ überlappt (Überlappung 26) und in axialer Richtung des Dichtungselementes 1˝ zum Zwecke der Justierung frei verschiebbar ist. Auf diese Weise kann bei der Montage der Dichtungsvorrichtung das Schubstück 1x bis zur Anlage an das Dichtungselement 1 herangeschoben und in dieser Lage mit der zugehörigen Klemmleiste 12 eingespannt werden.

Die Dichtungselemente 1 und 1˝ stoßen hierbei lose, d. h. unverbunden, aneinander. Ebenso genügt auch eine lose Überlappung zwischen dem Hauptteil 1y und dem Schubstück 1x des Dichtungselementes 1˝. Das Schubstück 1x ist dabei an seinem dem Dichtungselement 1 zugewandten Ende entsprechend der Kontur des Dichtungselementes 1 ausgeschnitten, was in dem Teilbereich der gekrümmten Zone, der in der Schließstellung des beweglichen Anlagenteiles federnd an einer Gegenfläche anliegt, zu einer zuverlässigen Abdichtung führt.

Bei mit Heißgas beaufschlagten Rohrleitungen besteht die Gefahr, daß an der kalten Seite des dem Heißgas zugewandten Dichtungselementes Kondensation und hierdurch bedingter Lochfraß auftritt. Um diese Gefahr auszuschließen, kann im Rahmen der Erfindung das dem Heißgas zugewandte Dichtungselement beheizt werden, was beispielsweise durch eine Heizspirale oder einen Heißluftstrom erfolgen kann. Erwärmt man auf diese Weise die kritischen Zonen des Dichtungselementes über die Taupunkttemperatur, so werden Kondensationserscheinungen und hierdurch bedingte Schäden vermieden.

Besonders charakteristisch für das erfindungsgemäße Dichtungselement ist die in Fig. 2 gestrichelt veranschaulichte elastische Verformung an allen Außenseiten des Umfanges. Auf diese Weise ergibt sich eine besonders große federnde Umfangslänge, die es ermöglicht, die gewünschte Federelastizität des Dichtungselementes mit einer wesentlich verringerten Bauhöhe H zu erreichen.

## Patentansprüche

1. Vorrichtung zur Abdichtung der Berührungszone zwischen einem beweglichen und einem festen Anlagenteil, insbesondere zwischen einem beweglichen Absperrelement (14) einer Rohrleitung und einem ortsfesten Sitz (11), enthaltend
a) wenigstens ein durch einen langgestreckten Federstahlstreifen gebildetes Dichtungselement (1), das zwei ebene Längskantenbereiche (2, 3) sowie eine zwischen diesen ebenen Längskantenbereichen angeordnete, quer zur Längsrichtung des Federstahlstreifens bogenförmig gekrümmte Zone (4) aufweist, wobei das Dichtungselement in der Schließstellung des beweglichen Anlagenteiles mit einem Teilbereich dieser gekrümmten Zone federnd an einer Gegenfläche anliegt,
b) eine Klemmeinrichtung (12, 13) zum Einspannen der beiden Längskantenbereiche (2, 3) des Dichtungselementes,
gekennzeichnet durch folgendes Merkmal:
c) das Dichtungselement (1) enthält wenigstens eine Abwinklung (z. B. 5) zwischen dem einen Längskantenbereich (2) und der gekrümmten Zone (4) und ist im übrigen so geformt, daß die beiden Längskantenbereiche (2, 3) übereinander liegen und nach der gleichen Seite weisen.

2. Vorrichtung nach Anspruch 1, dadurch gekennzeichnet, daß die beiden Längskantenbereiche (2, 3) des Dichtungselementes (1) fest miteinander verbunden und im bereits verbundenen Zustand mittels der Klemmeinrichtung (12, 13) gemeinsam einspannbar sind.

3. Vorrichtung nach Anspruch 1, dadurch gekennzeichnet, daß der Querschnitt des Dichtungselementes (1) zwei Abwinklungen (5, 6) von vorzugsweise je etwa 90° aufweist, die zwischen den beiden Längskantenbereichen (2, 3) und der gekrümmten Zone (4) des Dichtungselementes vorgesehen sind, wobei die Längskantenbereiche (2, 3) eine unterschiedliche Erstreckung quer zur Längsrichtung des Dichtungselementes aufweisen.

4. Vorrichtung nach Anspruch 1, dadurch gekennzeichnet, daß die beiden Längskantenbereiche (2, 3) quer zur Bewegungsrichtung (15) des beweglichen Anlagenteiles angeordnet sind.

5. Vorrichtung nach Anspruch 4, dadurch gekennzeichnet, daß zwei spiegelsymmetrisch ausgebildete Dichtungselemente (1, 1a) mittels derselben Klemmeinrichtung (12, 13) einspannbar sind.

6. Vorrichtung nach Anspruch 4, dadurch gekennzeichnet, daß spiegelsymmetrisch ausgebildete Dichtungselemente (1b, 1c) zu einem einstückigen Doppeldichtungselement vereinigt sind, wobei der zwischen den beiden gekrümmten Zonen (4b, 4c) liegende mittlere Bereich (17, 18) mittels der Klemmeinrichtung (12, 13) einspannbar ist.

7. Vorrichtung nach Anspruch 1, dadurch gekennzeichnet, daß die beiden Längskantenbereiche (2, 3) des Dichtungselementes (1d) parallel zur Bewegungsrichtung (15) des beweglichen Anlagenteiles angeordnet sind.

8. Vorrichtung nach Anspruch 1, dadurch gekennzeichnet, daß die beiden Längskantenbereiche (2, 3) des Dichtungselementes (1) durch Punktschweißen miteinander verbunden sind.

9. Vorrichtung nach Anspruch 3, dadurch gekennzeichnet, daß der zwischen den beiden Abwinklungen (z. B. 5g, 6g) befindliche Längskantenbereich nur mit einem Teil seiner Breite auf einem Auflager (z. B. 20) abgestützt ist.

10. Vorrichtung nach Anspruch 9, dadurch gekennzeichnet, daß die Federkraft des Dichtungselementes (z. B. 1g) durch Querverstellung des Auflagers (z. B. 20) einstellbar ist.

11. Vorrichtung nach Anspruch 1, gekennzeichnet durch wenigstens zwei Dichtungselemente (1, 1˝), von denen das eine Dichtungselement (1˝) unter einem Winkel von vorzugsweise 90° stumpf derart an das andere Dichtungselement (1) anstößt, daß dieses andere Dichtungselement (1) noch etwas über die Stoßstelle vorsteht.

12. Vorrichtung nach Anspruch 11, dadurch gekennzeichnet, daß das stumpf anstoßende erste Dichtungselement (1˝) an seinem dem anderen Dichtungselement (1) zugewandten Ende ein zum Zwekke der Justierung in axialer Richtung des ersten Dichtungselementes (1˝) frei verschiebbares Schubstück (1x) aufweist, das eine Überlappung (26) mit dem Hauptteil (1y) des ersten Dichtungselementes aufweist.

13. Vorrichtung nach Anspruch 1 zur Abdichtung in einer mit Heißgas beaufschlagten Rohrleitung, dadurch gekennzeichnet, daß zumindest das dem Heißgas zugewandte Dichtungselement beheizbar ist.

## Claims

1. Device for sealing the contact zone between a movable equipment part and fixed equipment part, particularly between a movable shut-off element (14) of a pipe and a stationary seat (11), containing
a) at least one sealing element (1) which is formed by an elongated spring steel strip and has two flat long edge regions (2, 3) and a zone (4) which is arranged between these two flat long edge regions and is curved at right angles to the longitudinal direction of the spring steel strip, and which in the closed position of the movable part of the equipment rests resiliently with a part of its curved zone on an opposing surface,
b) a clamping arrangement (12, 13) to fix the two long edge regions (2, 3) of the sealing elements,
characterised by the following feature:
c) the sealing element (1) has at least one bend (e.g. 5) between one long edge region (2) and the curved zone (4) and is also shaped so that the two long edge regions (2, 3) lie one above the other and point towards the same side.

2. Device as claimed in claim 1, characterised in that the two long edge regions (2, 3) of the sealing element (1) are firmly connected to one another and can be jointly fixed in the ready-connected state by means of the clamping arrangement (12, 13).

3. Device as claimed in claim 1, characterised in that the cross-section of the sealing element (1) has two bends (5, 6), each preferably of approximately 90°, which are provided between the two long edge regions (2, 3) and the curved zone (4) of the sealing element, the long edge regions (2, 3) extending by different distances at right angles to the longitudinal direction of the sealing element.

4. Device as claimed in claim 1, characterised in that the two long edge regions (2, 3) are arranged at right angles to the direction of movement (15) of the movable part of the equipment.

5. Device as claimed in claim 4, characterised in that two sealing elements (1, 1a) constructed in mirror symmetry can be fixed by means of the same clamping arrangement (12, 13).

6. Device as claimed in claim 4, characterised in that sealing elements (1b, 1c) constructed in mirror symmetry are united to form an integral double sealing element, and the central region (17, 18) lying between the two curved zones (4b, 4c) can be fixed by means of the clamping arrangement (12, 13).

7. Device as claimed in claim 1, characterised in that the two long edge regions (2, 3) of the sealing element (1d) are arranged parallel to the direction of movement (15) of the movable part of the equipment.

8. Device as claimed in claim 1, characterised in that the two long edge regions (2, 3) of the sealing element (91) are onnected to one another by spot welding.

9. Device as claimed in claim 3, characterised in that the long edge region located between the two bends (e.g. 5g, 6g) is supported with only a part of its width on a support (e.g. 20).

10. Device as claimed in claim 9, characterised in that the spring force of the sealing element (e.g. 1g) can be set by transverse movement of the support (e.g. 20).

11. Device as claimed in claim 1, characterised by at least two sealing elements (1, 1") of which one sealing element (1") butts against the other sealing element (1) at an angle of preferably 90° in such a way that this other sealing element (1) projects somewhat beyond the contact point.

12. Device as claimed in claim 11, characterised in that the butting first sealing element (1") has on its end facing the other sealing element (1) a thrust piece (1x) which is freely movable in the axial direction of the first sealing element (1") for the purpose of adjustment and has an overlap (26) with the main part (1y0 of the first sealing element.

13. Device as claimed in claim 1 for sealing in a pipe subjected to hot gas, characterised in that at least the sealing element facing the hot gas can be heated.

## Revendications

1. Dispositif d'étanchéité de la zone de contact entre une pièce mobile et une pièce fixe d'une installation, en particulier entre un élément mobile (14) d'obturation d'une canalisation et un siège fixe (11), comprenant
a) au moins un élément d'étanchéité (1) formé d'une bande allongée d'acier à ressort qui Comprend deux parties planes (2, 3) de bord longitudinal ainsi qu'une zone (4) incurvée en arc perpendiculairement à la direction de la longueur de la bande d'acier à ressort et disposée entre ces parties planes de bord longitudinal, une partie de cette zone incurvée de l'élément d'étanchéité s'appliquant élastiquement contre une surface complémentaire lorsque l'élément mobile de l'installation est en position de fermeture
b) un dispositif de serrage (12, 13) destiné à fixer en place les deux parties de bord longitudinal (2, 3) de l'élément d'étanchéité,
caractérisé par les particularités suivantes :
c) l'élément d'étanchéité (1) comporte au moins un coude (par exemple 5) entre l'une (2) des parties de bord longitudinal et la zone incurvée (4) et il est par ailleurs conformé de manière que les deux parties (2, 3) de bord longitudinal soient superposées et tournées vers le même côté.

2. Dispositif selon la revendication 1, caractérisé en ce que les deux parties (2, 3) de bord longitudinal de l'élément d'étanchéité (1) sont fixées l'une à l'autre et se fixent en place ensemble au moyen du dispositif de serrage (12, 13) après avoir été fixées l'une à l'autre.

3. Dispositif selon la revendication 1, caractérisé en ce que la section de l'élément d'étanchéité (1) comporte deux coudes (5, 6), dont chacun est de préférence d'environ 90° et qui sont prévus entre les deux parties (2, 3) de bord longitudinal et la zone incurvée (4) de l'élément d'étanchéité, les parties (2, 3) de bord longitudinal ayant des dimensions différentes perpendiculairement à la direction de la longueur de l'élément d'étanchéité.

4. Dispositif selon la revendication 1, caractérisé en ce que les deux parties (2, 3) de bord longitudinal sont disposées perpendiculairement à la direction du mouvement (15) de l'élément mobile de l'installation.

5. Dispositif selon la revendication 4, caractérisé en ce que deux éléments d'étanchéité symétriquement inverses (1, 1a) se fixent en place au moyen du même dispositif de serrage (12, 13).

6. Dispositif selon la revendication 4, caractérisé en ce que les éléments d'étanchéité symétriquement inverses (1b, 1c) sont réunis en un élément double d'étanchéité en une pièce, la partie médiane (17, 18) qui est située entre les deux zones incurvées (4b, 4c) se fixant en place au moyen du dispositif de serrage (12, 13).

7. Dispositif selon la revendication 1, caractérisé en ce que les deux parties (2, 3) de bord longitudinal de l'élément d'étanchéité (1d) sont disposées parallèlement à la direction du déplacement (15) de l'élément mobile de l'installation.

8. Dispositif selon la revendication 1, caractérisé en ce que les deux parties (2, 3) de bord longitudinal de l'élément d'étanchéité (1) sont fixées l'une à l'autre par des points de soudure.

9. Dispositif selon la revendication 3, caractérisé en ce que la partie de bord longitudinal se trouvant entre les deux coudes (par exemple 5g, 6g) ne prend appui sur un support (par exemple 20) que sur une partie de sa largeur.

10. Dispositif selon la revendication 9, caractérisé en ce que la force d'élasticité de l'élément d'étanchéité (par exemple 1g) est réglable par déplacement transversal du support (par exemple 20).

11. Dispositif selon la revendication 1, caractérisé par au moins deux éléments d'étanchéité (1, 1"), dont l'élément d'étanchéité (1") donne en bout contre l'autre élément d'étanchéité (1) sous un angle de préférence de 90° de manière que cet autre élément d'étanchéité (1) soit légèrement saillant au-delà du raccord.

12. Dispositif selon la revendication 11, caractérisé en ce que le premier élément d'étanchéité (1") donnant en bout contre l'autre comporte une pièce coulissante (1x) librement déplaçable à l'extrémité tournée vers l'autre élément d'étanchéité (1) en vue d'un ajustage en direction axiale du premier élément d'étanchéité (1"), cette pièce coulissante étant à chevauchement (26) avec la partie principale (1y) du premier élément d'étanchéité.

13. Dispositif selon la revendication 1, destiné à l'étanchéification à l'intérieur d'une canalisation balayée par du gaz chaud, caractérisé en ce qu'au moins l'élément d'étanchéité tourné vers le gaz chaud est chauffable.
